# EUROPÄISCHE PATENTANMELDUNG

(11) **EP 3 373 424 A1**
(43) Veröffentlichungstag der Anmeldung: **12.09.2018**
(21) Anmeldenummer: 17160315.2
(22) Anmeldetag: 10.03.2017
(51) Int. Cl.: H02K 15/00, H02K 17/16, H02K 17/20, H02K 3/02

(54) **HERSTELLUNG EINES ROTORS MITTELS ADDITIVER FERTIGUNG**

(71) Anmelder: Siemens Aktiengesellschaft, 80333 München (DE)
(72) Erfinder: Büttner, Klaus, 97618 Hollstadt (DE); Seufert, Reiner, 97616 Salz (DE); Vollmer, Rolf, 36129 Gersfeld (DE)

(57) **Zusammenfassung**

Die Erfindung betrifft ein Verfahren zur Herstellung eines Rotors einer elektrischen Maschine, der vorzugsweise als Käfigläufer ausgeführt ist. Die Kurzschlussringe und/oder Käfigstäbe werden unter Verwendung eines Metall-Pulver-Auftragsverfahrens gefertigt. Ferner betrifft die Erfindung einen insbesondere durch dieses Verfahren hergestellten Kurzschlussring für einen Rotor einer elektrischen Maschine.

## Beschreibung

Die Erfindung betrifft ein Verfahren zur Herstellung eines Rotors einer elektrischen Maschine, wobei der Rotor einen konzentrisch zur Rotorachse angeordneten Rotorkern aufweist, wobei der Rotorkern Nuten aufweist und wobei der Rotorkern am jeweiligen axialen Ende der Nuten jeweils eine ringförmige, konzentrisch zur Rotorachse angeordnete Aussparung aufweist, welche die Nuten verbindet. Ferner betrifft die Erfindung einen insbesondere durch dieses Verfahren hergestellten Kurzschlussring für einen Rotor einer elektrischen Maschine.

Bisher werden verschiedene Verfahren zur Herstellung eines Kurzschlusskäfigs, der Käfigstäbe im Rotorpaket sowie Kurzschlussringe an den Paketenden umfasst, für einen Rotor einer Asynchronmaschine genutzt.

Beim Kupfer-Druckgießverfahren werden die Käfigstäbe sowie die Kurzschlussringe gegossen.

Bei einem weiteren bekannten Verfahren werden bereits vorgefertigte Kupferstäbe in die im Rotorpaket befindlichen Nuten eingefügt und anschließend Kupferscheiben als Kurzschlussringe angelötet oder angeschweißt.

Bei einem dritten bekannten Verfahren werden vorgefertigte Kupferstäbe in im Rotorpaket befindliche Nuten eingefügt. Jedoch werden die Nuten nicht komplett ausgefüllt. Per Aluminium-Druckgießverfahren wird durch den entstandenen Kanal in den nicht komplett ausgefüllten Nuten zuerst ein unterer Kurzschlussring gegossen. Die Nuten werden anschließend aufgefüllt, sodass ein oberer Kurzschlussring angegossen werden kann.

Aus der EP 2800254 A1 ist zudem ein Verfahren bekannt, bei welchem ein Granulat eines elektrisch leitfähigen Materials in die Nuten und in die ringförmigen Aussparungen eingebracht wird, welches unter Zuführung von Hitze und unter Ausübung von Druck materialschlüssig mit dem Rotorkern verbunden wird.

Aus der EP 0484533 B1 ist ein Verfahren zur Anbringung von Beschichtungen auf die Oberfläche eines Produkts bekannt, wobei in einen Gasfluss ein metallisches Pulver eingebracht wird und dieses Gas- Pulvergemisch mit Überschallgeschwindigkeit auf das zu beschichtende Produkt trifft.

Infolge der hohen thermischen Belastung beim Kupfer-Druckgießen haben die Werkzeuge zum Kupfer-Druckgießen eine eingeschränkte Lebensdauer. Die elektrische Leitfähigkeit des druckgegossenen Kupfers in den Nuten ist zudem aufgrund von Materialverschmutzung und Lunkern verringert.

Aufgrund von Belastungen durch Fliehkräfte und Schwingungen besteht beim Anlöten bzw. Anschweißen des Kurzschlussrings an die Käfigstäbe die Gefahr der Rissbildung an den entstandenen Löt- oder Schweißstellen zwischen Kurzschlussstab und Kurzschlussring.

Wird der Nutquerschnitt bei dem oben genannten dritten Verfahren nicht komplett mit Kupfer gefüllt, ist der Rotor weniger gut für den Umrichterbetrieb geeignet, bei welchem der Kurzschlusskäfig sofort mit Strom beaufschlagt wird und daher das leitfähige Kupfer weniger Verluste verursacht als Aluminium.

Eine Vergrößerung der Oberfläche des Kurzschlussrings und das Einfügen von Schlitzen in ebendiesen, um eine bessere Kühlung zu erreichen, sowie der Aufbau von Hohlräumen und Kanälen, die als Thermosiphons dienen, sind bei den beschriebenen Verfahren nicht möglich. Zudem kann ein Materialgradient im Kurzschlussring nicht bewerkstelligt werden, bei welchem ein Verlauf von insbesondere leitfähigem Kupfer am Innenradius zu hartem und gegenüber hohen Drehzahlen beständigem Stahl am Außenradius besteht.

Der Erfindung liegt die Aufgabe zugrunde, ein Verfahren zur Herstellung eines vorzugsweise als Käfigläufer ausgeführten Rotors einer elektrischen Maschine zu finden, welches eine materialschlüssige Verbindung von Käfigstäben und- ringen sowie insbesondere im Kurzschlussring einen Materialgradienten von wenigstens zwei Materialien unterschiedlicher Festigkeit und die Einbringung von Schlitzen, Öffnungen und Kanälen, vorzugsweise zu Kühlzwecken, sowie Hohlräumen in den Kurzschlussring ermöglicht. Weiterhin liegt der Erfindung die Aufgabe zugrunde, einen entsprechenden Kurzschlussring zu schaffen.

Die Lösung der gestellten Aufgabe gelingt durch ein Verfahren zur Herstellung eines Rotors einer elektrischen Maschine, wobei der Rotor einen konzentrisch zur Rotorachse angeordneten Rotorkern aufweist, wobei der Rotorkern Nuten aufweist, wobei der Rotorkern am jeweiligen axialen Ende der Nuten jeweils eine ringförmige, konzentrisch zur Rotorachse angeordnete Aussparung aufweist, welche die Nuten verbindet und wobei die Nuten und/oder die jeweilige ringförmige Aussparung unter Anwendung eines additiven Fertigungsverfahrens mit einem elektrisch leitenden Material gefüllt werden.
Zudem gelingt die Aufgabe durch einen Kurzschlussring für einen Rotor einer elektrischen Maschine, der insbesondere nach diesem Verfahren hergestellt wurde.

Weitere vorteilhafte Ausführungen ergeben sich aus den Unteransprüchen.

Die Erfindung bietet den Vorteil, dass ein unter Verwendung eines additiven Fertigungsverfahrens, insbesondere eines Metall-Pulver-Auftragsverfahrens (MPA-Verfahren), hergestellter vorzugsweise als Käfigläufer ausgeführter Rotor einer elektrischen Maschine aus verschiedenen Materialien aufgebaut werden kann. Während bei anderen additiven Fertigungsverfahren wie Metall-Lasersintern nur eine Materialart zur Herstellung eines Bauteils verwendet werden kann, können beim MPA-Verfahren bis zu sechs verschiedene Materialien gleichzeitig eingesetzt werden.

Es ist möglich, vorgefertigte Kupferstäbe in im Rotorpaket befindliche Nuten einzufügen, wobei die Nuten vollständig ausgefüllt werden, und anschließend vorzugsweise mittels MPA-Verfahren die Kurzschlussringe an den axialen Enden der Nuten materialschlüssig anzufügen. Zudem ist es möglich sowohl die Käfigstäbe als auch die Kurzschlussringe des Rotors mit diesem Verfahren herzustellen. Hierbei wird zuerst ein unterer Teil, der einen unteren Kurzschlussring und ca. die halbe Kurzschlussstablänge umfasst, gefertigt. Anschließend wird das Rotorpaket eingefügt und die andere Hälfte der Käfigstäbe sowie ein oberer Kurzschlussring gefertigt. Außerdem können auch nur die Kurzschlussringe per MPA-Verfahren gefertigt werden.

Beim MPA-Verfahren wird ein Hauptgas, vorzugsweise Wasserdampf, in einer Lavaldüse beschleunigt. Kurz vor dem Lavalpunkt werden Pulverpartikel injiziert. Die Pulverpartikel werden auf Überschallgeschwindigkeit beschleunigt und treffen so auf einem Substrat oder einem Bauteil auf. Die hohe kinetische Energie des Pulverpartikels wird beim Aufprall in Wärme umgewandelt, wodurch der Partikel anhaftet. Da die Pulverpartikel nicht aufgeschmolzen werden, findet nur ein geringer Energieeintrag in das Bauteil statt.

Beim MPA-Verfahren können mehrere Düsen gleichzeitig verschiedene Pulverpartikel auftragen. Somit kann bei der Herstellung eines Bauteils ein Materialgradient von Materialien unterschiedlicher Festigkeit erreicht werden. So ist es bei einer bevorzugten Ausführungsform möglich, einen Kurzschlussring zu erzeugen, der am Innenradius insbesondere leitfähiges Kupfer oder Aluminium für einen bestmöglichen Wirkungsgrad und am Außenradius insbesondere Materialien höherer Festigkeit wie Stahl oder Titan aufweist, um hohen Drehzahlen standzuhalten. Der Materialgradient kann hierbei in axialer wie in radialer Richtung fließend ausgeführt sein. Jedoch ist auch ein abrupter Übergang von Kupfer oder Aluminium zu Titan oder Stahl möglich. Dieser Armierungsring ist stoffschlüssig mit dem leitfähigen Teil des Kurzschlussrings verbunden, ist beständig gegenüber Fliehkräften und ermöglich somit höhere Drehzahlen.

Durch den schichtweisen Aufbau des Kurzschlussrings durch das MPA-Verfahren ist auch das Einfügen einer Gitter- oder Haltestruktur aus beständigem Stahl oder Titan möglich.
Beim MPA-Verfahren können zu Kühlzwecken Öffnungen, Schlitze und Kanäle im Kurzschlussring ausgespart werden sowie Vergrößerungen der Oberfläche gefertigt werden. Das Anbringen von Lüfterflügeln und Wuchtelementen ist möglich.

Das hierdurch ebenfalls mögliche Aussparen von Hohlräumen in den Kurzschlussring optimiert die Masseverteilung und wirkt sich positiv auf die Belastungen durch entstehende Fliehkräfte wie auch auf höhere Drehzahlen aus.

Durch die hohe kinetische Energie der Partikel beim Aufprall ist bei Verwendung eines MPA-Verfahrens zudem eine stoffschlüssige Verbindung des Kurzschlussrings mit einer anzubindenden Welle möglich.

Der mittels des MPA-Verfahrens gefertigte Kurzschlussring bietet den Vorteil, dass Öffnungen insbesondere in Form von Schlitzen realisiert werden können, welche eine Kühlung erleichtern. Außerdem können Kanäle ausgespart werden, die sich besonders gut zur Verwendung als Thermosiphons eignen. Dadurch wird eine Effizienz- und Leistungssteigerung der elektrischen Maschine erreicht.

Die ausgesparten Hohlräume im Kurzschlussring wirken sich aufgrund der Masseverteilung positiv auf hohe Drehzahlen aus, denn Fliehkräfte werden durch den näher an die Welle rückenden Massenschwerpunkt verringert.

Durch den bereits erläuterten Materialgradienten im Kurzschlussring sowie eine eingefügte Gitter- oder Haltestruktur, vorzugsweise aus Titan oder Stahl, können ebenso höhere Drehzahlen bewerkstelligt werden.
Per MPA-Verfahren angefügte Lüfterflügel zur Kühlung und/oder Wuchtelemente, um einen Ausgleich der Masseverteilung und somit einen Gleichlauf des Motors zu erreichen, wirken sich positiv auf die Effizienz und Leistung des Motors aus.

Die stoffschlüssige Verbindung des Kurzschlussrings an die Welle erlaubt höhere Drehzahlen.

Besonders gut eignet sich ein Kurzschlusskäfig, der vollständig aus Kupfer gefertigt ist, für den Umrichterbetrieb, da hierbei der Kurzschlusskäfig beim Anlauf sofort mit Strom beaufschlagt wird und daher sehr leitfähig sein muss. Aufgrund der höheren Leitfähigkeit von Kupfer gegenüber Aluminium können insbesondere Kurzschlussringe aus Kupfer kompakter gefertigt werden.

Im Folgenden wird die Erfindung anhand der in den Figuren dargestellten Ausführungsbeispiele näher beschrieben und erläutert. Es zeigen:
- FIG 1: eine Ausgestaltung eines an eine Welle angebundenen Rotors aus einem Rotorkern und zwei Kurzschlussringen,
- FIG 2: eine Ausgestaltung des Rotorkerns, der Nuten aufweist,
- FIG 3: eine Ausgestaltung des an die Welle angebundenen Rotors, wobei die beiden Kurzschlussringe Öffnungen aufweisen,
- FIG 4: eine Ausgestaltung eines Materialgradienten im Kurzschlussring, wobei der Übergang zwischen den Materialien abrupt ist,
- FIG 5: eine Ausgestaltung eines Materialgradienten im Kurzschlussring, wobei der Übergang zwischen den Materialen fließend ist,
- FIG 6: eine Ausgestaltung des mit wenigstens einem Hohlraum und wenigstens einem Kanal versehenen Kurzschlussrings,
- FIG 7: den Ablauf des Herstellungsverfahrens.

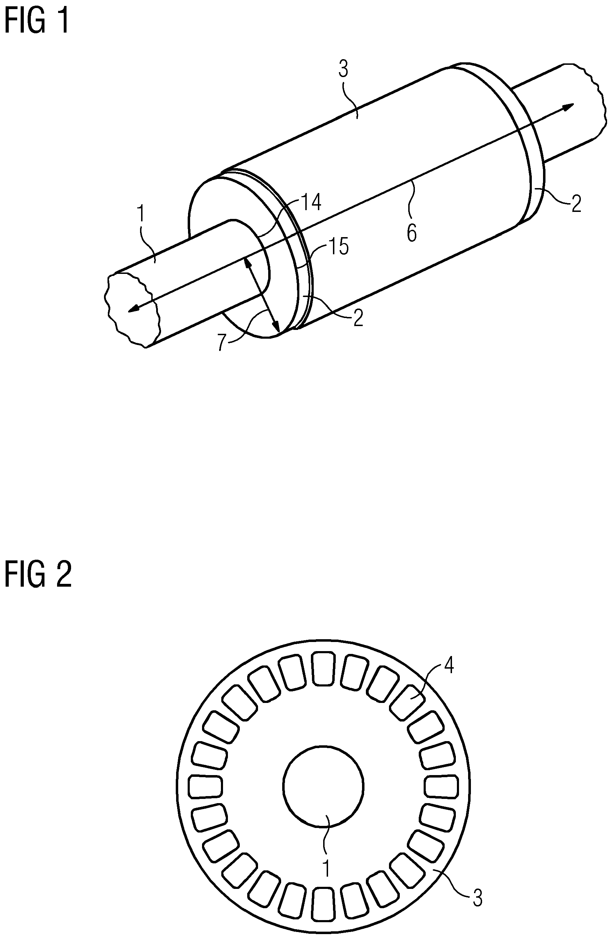

FIG 1 zeigt eine Ausgestaltung eines an eine Welle 1 angebundenen Rotors, der einen Rotorkern 3 und jeweilig an dessen axialem Ende einen Kurzschlussring 2 aufweist. Zudem werden die Axialrichtung 6 und die Radialrichtung 7, sowie der Innenradius 14 und der Außenradius 15 des Kurzschlussrings gezeigt. Vorzugsweise ist der Rotor als Käfigläufer ausgeführt und umfasst Käfigstäbe, die in axialer Richtung 6 oder geschrägt im Wesentlichen in axialer Richtung 6 verlaufen, sowie Kurzschlussringe 2 an den axialen Enden der Käfigstäbe, die diese kurzschließen. Erfindungsgemäß können nur die Käfigstäbe oder nur die Kurzschlussringe 2 oder die Käfigstäbe und die Kurzschlussringe 2 mittels MPA-Verfahren gefertigt werden. Vorteilhaft werden die Käfigstäbe aus vorzugsweise Kupfer oder Aluminium vorgefertigt und in den Rotorkern 3 eingefügt und anschließend die Kurzschlussringe 2 mittels MPA-Verfahren angefügt. Ein mittels MPA-Verfahren hergestellter Kurzschlussring 2 bietet den Vorteil, dass insbesondere Hohlräume, Kanäle und Öffnungen eingefügt werden können. Auch ein Materialgradient, bei welchem in axialer 6 und/oder radialer 7 Richtung ein Übergang zweier Materialien unterschiedlicher Festigkeit bewerkstelligt wird, ist möglich.

FIG 2 zeigt eine Ausgestaltung des Rotorkerns 3, der an eine Welle 1 angebunden ist und in axialer Richtung 6 Nuten 4 aufweist. Die Nuten können mit vorgefertigten Käfigstäben gefüllt werden und anschließend werden per MPA-Verfahren die Kurzschlussringe angefügt.

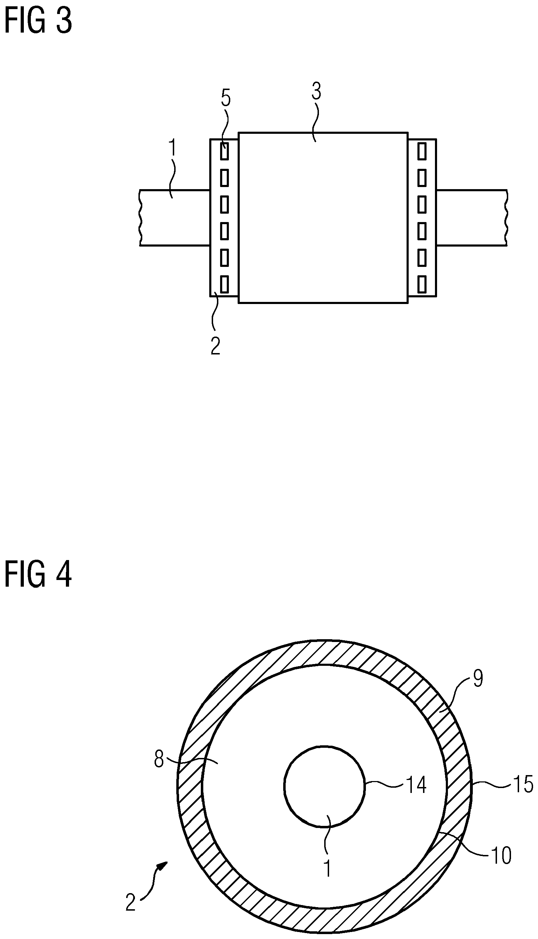

FIG 3 zeigt eine Ausgestaltung des an die Welle 1 angebundenen Rotors. Die Kurzschlussringe 2 sind mit Öffnungen 5 versehen, welche vorzugsweise als Schlitze ausgeführt sind, und zu Kühlzwecken dienen.

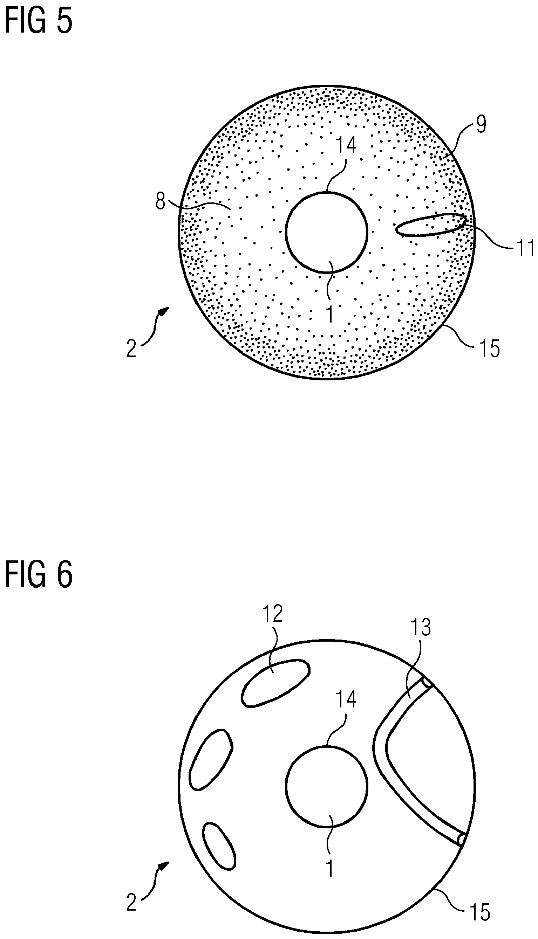

FIG 4 und FIG 5 zeigen eine Ausgestaltung eines Materialgradienten in einem Kurzschlussring 2, bei welchem in radialer Richtung 7 (vgl. FIG 1) ein Übergang von einem Material einer ersten Festigkeit, insbesondere Kupfer oder Aluminium, zu einem Material einer gegenüber der ersten höheren Festigkeit, insbesondere Stahl oder Titan, geschaffen ist. Am Innenradius 14 des Kurzschlussrings 2, welcher an die Welle 1 angrenzt, wird ein elektrisch leitfähiges Material wie Kupfer angebracht, um die in die Nuten eingebrachten Käfigstäbe kurzzuschließen. Am Außenradius 15 wird ein gegenüber Fliehkräften beständiges Material wie Stahl eingebracht. Zwischen den beiden Materialien 8 und 9 kann ein abrupter Übergang 10 erfolgen, der in FIG 4 dargestellt ist. Ein Armierungsring liegt hierbei um das elektrisch leitfähige Material und ermöglicht höhere Drehzahlen. In FIG 5 ist ein fließender Übergang 11 zwischen den beiden Materialien 8 und 9 dargestellt. Auch in axialer Richtung 6 ist ein Materialgradient, der einen abrupten 10 oder fließenden Übergang 11 zweier oder mehrerer Materialien 8 und 9 aufweist, möglich. Da die Kurzschlussringe 2 an den jeweiligen axialen Enden des Rotors mittels MPA-Verfahren angefügt werden, ist eine stoffschlüssige Verbindung zur Welle 1 möglich.

FIG 6 zeigt eine Ausgestaltung des mit Hohlräumen 12 und Kanälen 13 versehenen Kurzschlussrings 2. Die Hohlräume sind insbesondere näher am Außenradius 15 als am Innenradius 14 zu finden, um den Massenschwerpunkt nah an die Welle 1 zu verschieben und so Fliehkräfte zu verringern. Die Kanäle eignen sich besonders gut zur Verwendung als Thermosiphons, um vorzugsweise den Wärmefluss in Richtung der Welle 1 zu begünstigen.

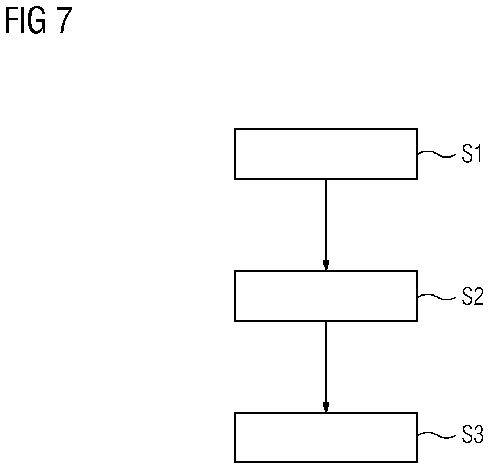

FIG 7 beschreibt einen Ablauf eines Herstellungsverfahrens für einen erfindungsgemäßen Rotor einer elektrischen Maschine. Nach einer bevorzugten Herstellungsart des als Käfigläufer ausgeführten Rotors wird im Verfahrensschritt S1 ein Rotorpaket, das über Nuten verfügt, bereitgestellt. Anschließend werden im Verfahrensschritt S2 bereits vorgefertigte Kupferstäbe in die vorhandenen Nuten eingefügt. Diese erfüllen die Funktion der Käfigstäbe des Käfigläufers. Im Anschluss werden im Verfahrensschritt S3 Kurzschlussringe mittels MPA-verfahren an die axialen Enden der Käfigstäbe angefügt.

## Patentansprüche

1. Verfahren zur Herstellung eines Rotors einer elektrischen Maschine,
- wobei der Rotor einen konzentrisch zur Rotorachse angeordneten Rotorkern (3) aufweist,
- wobei der Rotorkern (3) Nuten (4) aufweist,
- wobei der Rotorkern am jeweiligen axialen Ende der Nuten (4) jeweils eine ringförmige, konzentrisch zur Rotorachse angeordnete Aussparung aufweist, welche die Nuten verbindet,
**dadurch gekennzeichnet, dass** die Nuten und/oder die jeweilige ringförmige Aussparung unter Anwendung eines additiven Fertigungsverfahrens mit einem elektrisch leitenden Material gefüllt werden.

2. Verfahren nach Anspruch 1, wobei als additives Fertigungsverfahren ein Metall-Pulver- Auftragsverfahren angewendet wird.

3. Verfahren nach einem der Ansprüche 1 oder 2, wobei die Nuten (4) und/oder wenigstens eine ringförmige Aussparung mit Kupfer oder Aluminium oder deren Legierungen gefüllt werden.

4. Verfahren nach einem der Ansprüche 1 bis 3, wobei die Nuten (4) mit vorgefertigtem Material gefüllt werden und die ringförmige Aussparung mittels des Metall-Pulver-Auftragsverfahrens gefüllt wird zur Erzeugung eines Kurzschlussrings (2).

5. Verfahren nach einem der Ansprüche 1 bis 4, wobei bei einem durch die Füllung der ringförmigen Aussparung entstehenden Kurzschlussring (2) wenigstens eine Öffnung (5) und/oder wenigstens ein Hohlraum (12) und/oder wenigstens ein Kanal (13) ausgespart werden.

6. Verfahren nach einem der Ansprüche 1 bis 5, wobei eine Materialmischung aus einem Material einer ersten Festigkeit (8), insbesondere Kupfer oder Aluminium, und wenigstens einem Material mit einer gegenüber der ersten Festigkeit höheren Festigkeit (9), insbesondere Stahl oder Titan, als Material für die additive Fertigung eingesetzt wird.

7. Verfahren nach einem der Ansprüche 1 bis 6, wobei ein Materialübergang von einem Material einer ersten Festigkeit (8), insbesondere Kupfer oder Aluminium, zu wenigstens einem Material mit einer gegenüber der ersten Festigkeit höheren Festigkeit (9), insbesondere Stahl oder Titan, in axialer (6) und/oder radialer (7) Richtung des Kurzschlussrings (2) erzeugt wird.

8. Verfahren nach Anspruch 7, wobei der Kurzschlussring (2) derart ausgebildet wird, dass die Materialfestigkeit vom Innenradius (14) zum Außenradius (15) des Kurzschlussrings (2) zunimmt.

9. Verfahren nach einem der Ansprüche 7 oder 8, wobei der Übergang abrupt (10) ist.

10. Verfahren nach einem der Ansprüche 7 oder 8, wobei der Übergang fließend (11) ist.

11. Verfahren nach einem der Ansprüche 1 bis 10, wobei wenigstens eine Haltestruktur oder wenigstens ein Gitter, insbesondere aus Titan oder Stahl, im Kurzschlussring (2) ausgebildet wird.

12. Verfahren nach einem der Ansprüche 1 bis 11, wobei wenigstens eine Oberflächenstruktur auf dem Kurzschlussring (2), insbesondere in Form eines Flügels und/oder eines Wuchtelements, ausgebildet wird.

13. Verfahren nach einem der Ansprüche 1 bis 12, wobei der Kurzschlussring (2) mit einer anzubindenden Welle (1) stoffschlüssig verbunden wird.

14. Kurzschlussring (2) für einen Rotor einer elektrischen Maschine, der insbesondere nach einem Verfahren gemäß einem der Ansprüche 1 bis 13 hergestellt wurde, wobei der Kurzschlussring (2) ausgesparte Öffnungen (5), insbesondere Schlitze, aufweist.

15. Kurzschlussring (2) für einen Rotor einer elektrischen Maschine nach Anspruch 14, wobei der Kurzschlussring (2) Hohlräume (12) und/oder Kanäle (13) aufweist.

16. Kurzschlussring (2) für einen Rotor einer elektrischen Maschine nach Anspruch 14 oder 15, wobei der Kurzschlussring (2) aus wenigstens einem Material einer ersten Festigkeit (8), insbesondere Kupfer oder Aluminium, und wenigstens einem Material mit einer gegenüber der ersten Festigkeit höheren Festigkeit (9), insbesondere Stahl oder Titan, besteht.

17. Kurzschlussring (2) nach einem der Ansprüche 14 bis 16, wobei der Kurzschlussring (2) einen Materialübergang von einem Material einer ersten Festigkeit (8), insbesondere Kupfer oder Aluminium, zu wenigstens einem Material mit einer gegenüber der ersten Festigkeit höheren Festigkeit (9), insbesondere Stahl oder Titan, in axialer (6) und/oder radialer (7) Richtung des Kurzschlussrings aufweist.

18. Kurzschlussring (2) nach einem der Ansprüche 14 bis 17, wobei der Kurzschlussring (2) über wenigstens eine Haltestruktur oder wenigstens ein Gitter, insbesondere aus Titan oder Stahl, verfügt.

19. Kurzschlussring (2) nach einem der Ansprüche 14 bis 18, wobei der Kurzschlussring (2) über wenigstens eine Oberflächenstruktur, insbesondere in Form eines Flügels und/oder eines Wuchtelements, verfügt.

20. Kurzschlussring (2) nach einem der Ansprüche 14 bis 19, wobei der Kurzschlussring (2) mit einer an den Rotor der elektrischen Maschine anzubindenden Welle (1), insbesondere aus Stahl, per Stoffschluss verbunden ist.

21. Elektrische Maschine, die einen Kurzschlussring nach einem der Ansprüche 14 bis 20 aufweist.
